# EUROPEAN PATENT SPECIFICATION

(11) **EP 4 098 421 B1**
(45) Date of publication and mention of the grant of the patent: **01.11.2023**
(21) Application number: 22175593.7
(22) Date of filing: 26.05.2022
(51) Int. Cl.: B29C 44/18, B29C 44/32, B29C 44/60, E06B 9/06, B29K 75/00, B29L 31/00

(54) **LINE AND METHOD FOR PRODUCING SLATS FOR ROLLER SHUTTERS**
LINIE UND VERFAHREN ZUR HERSTELLUNG VON LAMELLEN FÜR ROLLLÄDEN
LIGNE ET PROCEDE DE FABRICATION DE LAMES POUR VOLETS ROULANTS

(30) Priority: 31.05.2021 IT 202100014165
(43) Date of publication of application: 07.12.2022
(73) Proprietor: Dallan S.p.A., 31033 Castelfranco Veneto (Treviso) (IT)
(72) Inventor: DALLAN, Andrea, 31033 Castelfranco Veneto, TREVISO (IT)
(74) Representative: Zanettin, Gianluigi

(56) References cited:
- EP-A1- 2 857 627
- WO-A1-2020/074680
- CN-A- 111 823 471
- DE-A1- 3 508 849
- DE-A1-102006 057 772
- US-A1- 2016 361 855

## Description

### Field of application

The subject of the present invention is a line and method for producing slats for roller shutters.

### Prior art

As is known, roller shutters consist of a plurality of elongated profiles, referred to as "slats" in jargon, connected in a modular manner to each other longitudinally to form a jointed curtain.

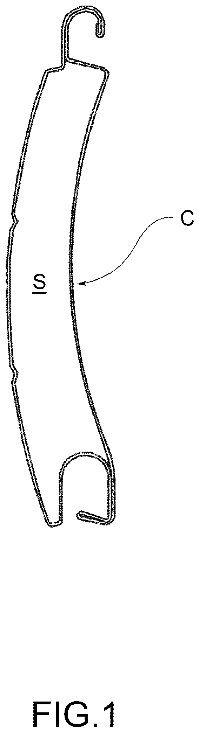

Generally, as illustrated in Fig. 1, each slat consists of a hollow, box section body C, made of metal and filled internally with polyurethane foam S (expanded polyurethane) to increase the structural strength of the slat, as well as its thermal insulation capacity.

Typically, the metal, box section body of a slat is obtained by bending and profiling a strip of metal sheet. During the profiling process, when the box section body is partially open with the inner cavity still accessible, it is foamed by injecting foam through the opening of the box section body. After foaming, the profile is cut to obtain foamed bars, which will then undergo machining (e.g. punching) to obtain the finished slats. EP 2 857 627 A1 discloses a production line of slats for roller shutters with a foaming machine.

The polyurethane foaming process provides for the reagents (isocyanate and polyol) to be mixed together substantially only at the time of injection into the slat. The reagents are mixed in a mixing chamber associated with the injection nozzle so that polyurethane foam is formed substantially only within the slat. From the moment of foaming to the moment of cutting the foamed profile, at least thirty seconds must pass, which is the average time necessary for the mixture of the reagents to polymerize, generating polyurethane foam (expanded polyurethane). For this purpose, in a production line for producing slats for shutters, between the foaming station and the cutting station, there is a polymerization bench, i.e., a section of the line where the foamed profile is allowed to slide without external intervention to allow the polyurethane foam to polymerize. The length of the polymerization bench is determined according to the working speed of the production line.

In general, production lines for producing metal slats for roller shutters comprise sequentially the following apparatuses:
- a metal sheet decoiler;
- a metal sheet preheating bench (optional);
- a profiling machine;
- a foaming apparatus, integrated into the profiling machine;
- a polymerization bench;
- a closed foamed profile cutting apparatus for obtaining semi-finished slats;
- at least one machining apparatus (typically, a punching machine) for finishing the slats, connected to the cutting station via a device for collecting and transporting the semi-finished slats; and
- a bench for unloading the finished slats.

Foaming the box body being formed is one of the most delicate steps in the shutter slat production process. In particular, it is essential for the polyurethane foam dispensed by the injection nozzle to enter completely into the slot formed by the partially open box body, without escaping therefrom. In fact, if the polyurethane foam should leak even in part from the box body, it would create considerable problems of soiling, not only the slat being formed, but also the production line, starting with the rollers of the profiling machine.

In the event of a polyurethane foam leak, the system must be shut down as quickly as possible to prevent the polyurethane foam from being dragged a long way downstream of the foaming machine, increasing the soiled area. Due to the rapidity of solidification of polyurethane foam and the difficulties involved in its removal (in some cases even partial disassembly of the line may be necessary), a leakage of polyurethane foam may cause machine downtime of up to half a day. This is at the expense of the continuity of the production process.

Another operational requirement of the foaming stage is to ensure a constant flow of polyurethane foam for several hours. In fact, foaming takes place continuously on the box section body being formed, obtained from a reel of pre-painted sheet that may have a linear extension of several thousand meters. To ensure adequate continuity of production, the constancy in foaming must be ensured at least long enough to exhaust a roll of metal sheet.

Up to now, the control of foaming has been left to the production line workers. By necessity, this type of control may not be continuous. Therefore, it may happen that malfunctions in the foaming machine are not detected in time, causing uncontrolled leakage of polyurethane foam and inevitable long stops in the production line, which are necessary for cleaning and restoration operations.

In the sector of reference, there is therefore a still completely unsatisfied need to ensure control of the foaming stage that allows for not only the frequency of polyurethane foam leakages to be reduced, but also for the extent of these leakages to be reduced, having as the final objective the reduction of plant downtime linked to cleaning operations.

### Disclosure of the invention

Thus, it is a principal object of the present invention to eliminate totally or st least partially the drawbacks of the aforementioned prior art by providing a production line and a method for producing slats for roller shutters that allows the frequency and extent of polyurethane foam leaks to be significantly reduced, thereby limiting downtime associated with cleaning operations.

A further object of the present invention is to provide a production line and method for producing slats for roller shutters that are operationally simple to control and at the same time reliable.

### Brief description of the drawings

The technical characteristics of the invention, according to the aforesaid objects, may be clearly seen in the content of the claims provided below, and its advantages will become more readily apparent in the detailed description that follows, made with reference to the appended drawings, which represent one or more purely illustrative and non-limiting embodiments thereof, wherein:
- Fig. 1 is an orthogonal cross-sectional view of a traditional slat for roller shutters;
- Fig. 2a is an orthogonal plan view of the lay-out of a shutter slat production line according to a preferred embodiment of the invention;
- Fig. 2b is a detail view of a portion of the line of Fig. 2a;

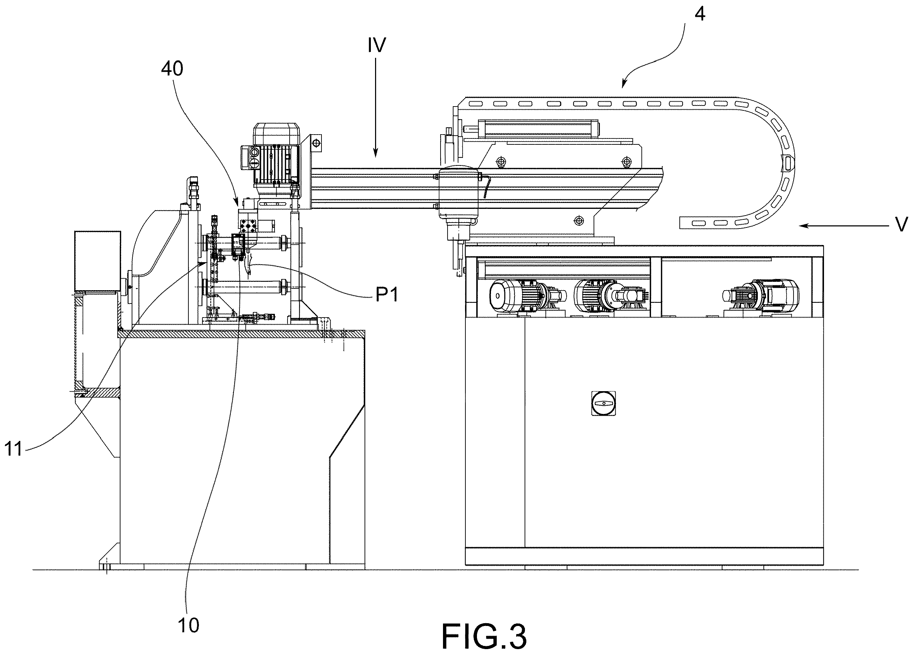

- Fig. 3 is a simplified cross-sectional view of the line of Fig. 2b according to the cross-sectional plane III-III indicated therein and conducted at a foaming machine;

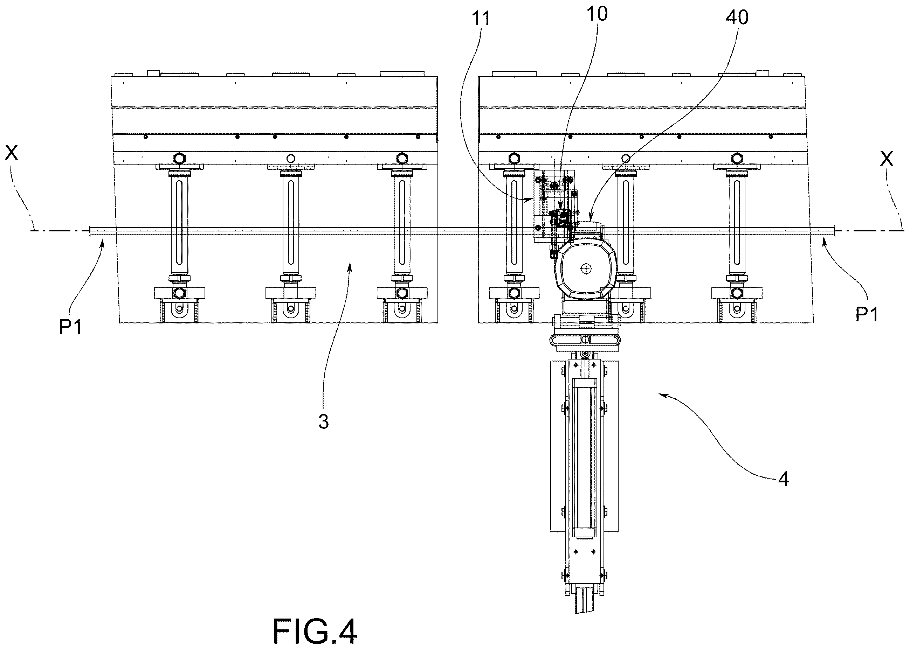

- Fig. 4 is a simplified orthogonal view from above of the line portion with the foaming machine of Fig. 3, according to the arrow IV indicated therein;

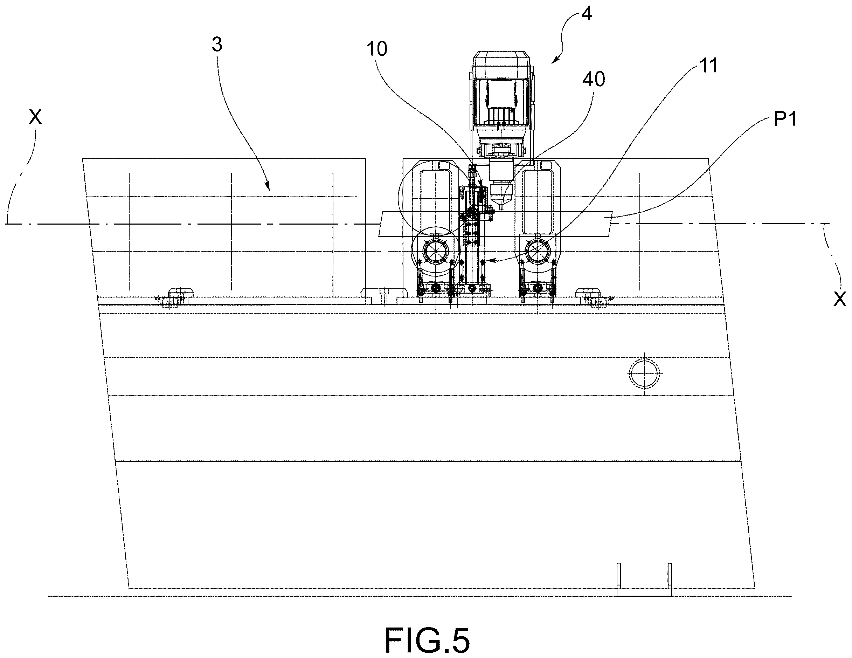

- Fig. 5 is a simplified orthogonal view in elevation of the line portion with the foaming machine of Fig. 3, according to the arrow V indicated therein, with some parts removed to better illustrate others;
- Fig. 6 is an enlarged view of a detail of Fig. 3;
- Fig. 7 is an enlarged view of a detail of Fig. 5;
- Fig. 8 is an enlarged view of a detail of Fig. 4;
- Fig. 9 shows the detail of Fig. 8 further enlarged, illustrated with an optical acquisition device arranged in a different position with respect to the injection nozzle of the foaming machine;
- Fig. 10 shows the detail of Fig. 7, illustrated with an optical acquisition device arranged in a different position with respect to the injection nozzle of the foaming machine; and
- Fig. 11 shows a detail of Fig. 6 further enlarged, related to an optical acquisition device and the injection nozzle of the foaming machine.

### Detailed description

A production line for producing slats for roller shutters according to the invention has been denoted as a whole with the reference number 1 in the appended figures.

Here and in the rest of the description and in the claims, reference will be made to the line 1 in the condition of use. Therefore, any references to a lower or upper position or to a horizontal or vertical orientation should be interpreted in this sense.

According to a general embodiment of the invention, the production line 1 for producing slats for roller shutters comprises:
- a profiling machine 3, suitable to form a closed hollow, box section profile from a strip of metal sheet, sliding it along a longitudinal direction of advancement X; and
- a foaming machine 4, which is integrated in the profiling machine 3 and is suitable for dosing a predefined quantity of a mixture of polyol and isocyanate in the unit of time inside the hollow, box section profile, partially open P1 while it is being formed by means of an injection nozzle 40.

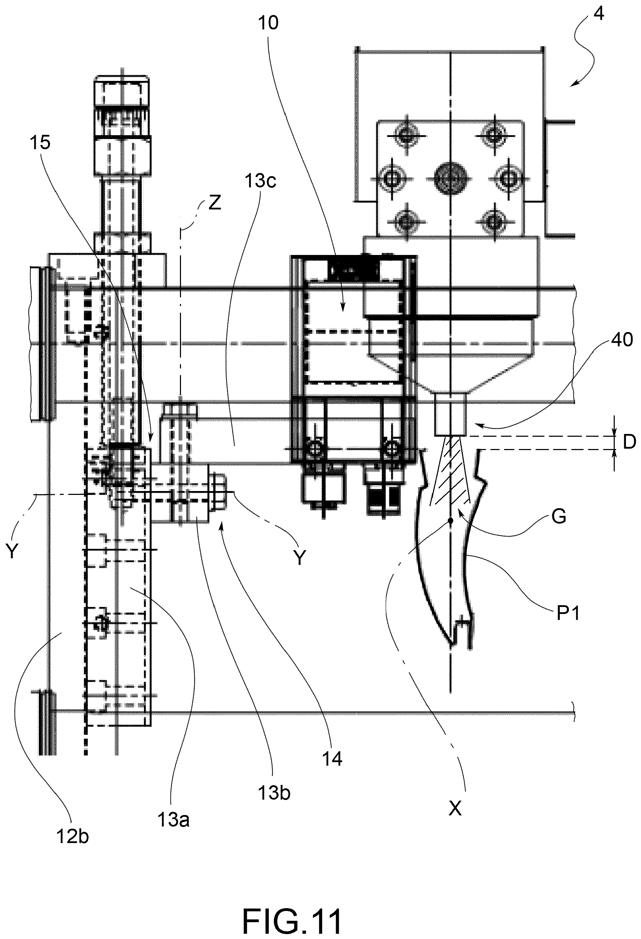

Operationally, as illustrated schematically in Fig. 11, the injection nozzle 40 generates a jet G of a mixture of polyol and isocyanate and is positionable at a predetermined dispensing position along said longitudinal direction of advancement X, above the hollow, box section profile, partially open P1 while it is being formed.

In particular, as shown schematically in Fig. 11, the injection nozzle 40 is positioned at a predetermined distance D from the hollow, box section profile, partially open P1 while it is being formed, to avoid the risk of the sliding profile impacting against the nozzle 40. Thus, the jet G is visible from the outside as it is not completely shielded by the profile.

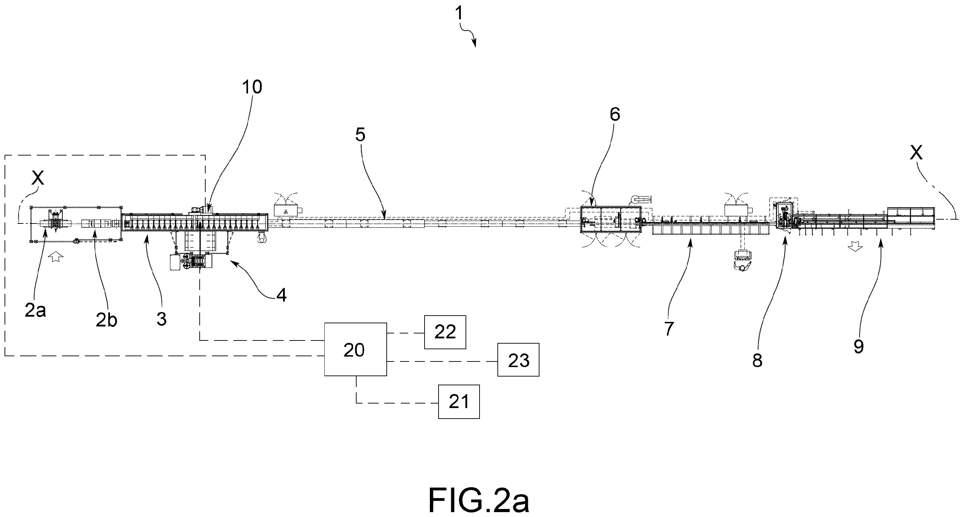

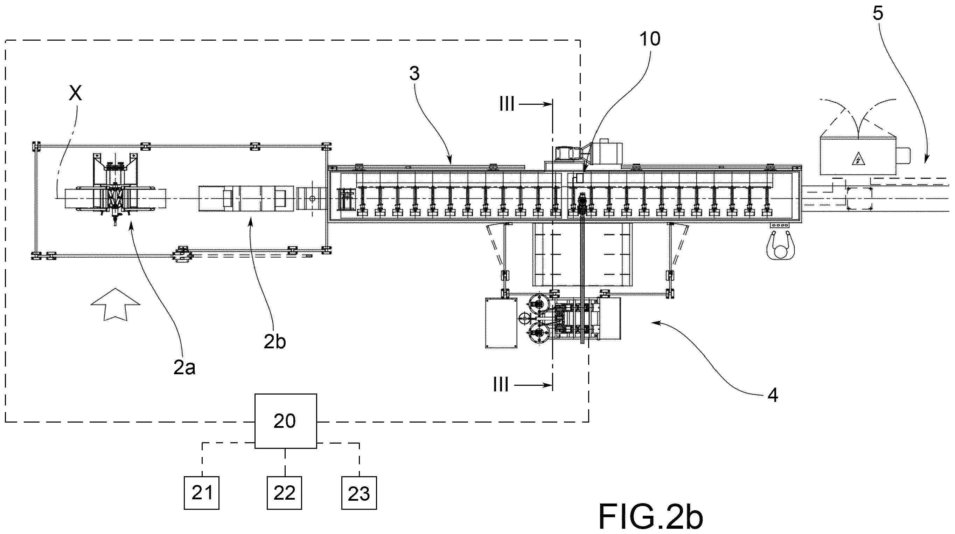

Advantageously, according to the preferred embodiment illustrated in Fig. 2a, upstream of the profiling machine 3 the slat production line 1 may comprise:
- a decoiler 2a of the sheet metal that feeds the production line 1; and
- a sheet metal preheating bench 2b.

Advantageously, immediately downstream of the profiling machine 3, the slat production line 1 comprises a polymerization bench 5, which is arranged to obtain a closed, hollow, foamed, box section profile.

Advantageously, downstream of the polymerization bench 5, the slat production line 1 may further comprise a cutting apparatus 6 that is suitable to cut the closed, hollow, foamed, box section profile to obtain semi-finished slats of a predetermined length.

Advantageously, downstream of the cutting apparatus 6, the slat production line 1 may further comprise:
- at least one machining apparatus 8 (typically, a punching machine) for finishing the slats, which is connected to the cutting apparatus via a device for collecting and transporting the semi-finished slats; and
- an unloading bench 9 for the finished slats.

According to the invention, the slat production line 1 comprises an optical acquisition device 10 that is arranged in proximity to said predefined dispensing position and is suitable to capture, preferably continuously, images of the jet G of the polyol and isocyanate mixture dispensed from said injection nozzle 40.

Also according to the invention, the slat production line 1 further comprises a control system 20, which:
- is connected to the aforesaid optical acquisition device 10 to capture images of the jet G generated by the device 10; and
- is configured to compare the captured images with at least one reference image of the jet G stored in memory means 21 associated with said control system 20, so as to verify whether the captured images of the jet G are comparable within predefined error margins with said reference image or whether they deviate from it.

The aforesaid reference image relates to a jet G correlated with proper foaming of the hollow, box section profile, partially open P1 while it is being formed.

The expression "jet correlated with proper foaming of the hollow, box section profile, partially open while it is being formed" means a jet having characteristics such as to ensure that the mixture of polyol and isocyanate dispensed by the injection nozzle enters the hollow, box section profile completely without being dispersed even in part to the outside.

The aforesaid control system 20 is programmed to activate an alarm procedure if a deviation from said reference image is detected.

Due to the invention, the production line 1 is subjected to continuous monitoring of the foaming stage. Said monitoring allows for real-time detection of operational situations that may result in anomalous foaming and the polyurethane foam leaking out of the hollow, box section profile.

Operationally, the activation of an alarm procedure correlated with the detection of anomalous situations may therefore allow for:
- execution of operations aimed at restoring optimal foaming conditions before foam leakage situations are generated; or
- a timely blocking of the plant, and in particular of the foaming machine, to minimize the extent of soiling generated by any leakage of polyurethane foam.

Thus, due to the invention, the frequency and extent of polyurethane foam leaks may be significantly reduced, thereby limiting downtime associated with cleaning operations.

Preferably, the aforesaid control system 20 is configured to compare the captured images with said at least one reference image of the jet G based on predefined geometric characteristics of said jet.

Preferably, the predefined geometric characteristics of the jet based on which the comparison with reference images is conducted comprise the direction of the jet and/or the shape of the jet. The jet G may be likened to a cone with a vertex in the injection nozzle. The direction of the jet is identifiable with the axis of the cone, while the shape of the jet may be defined by the opening angle of the cone.

In fact, it has been possible to verify that generally the leakage of polyurethane foam is due to:
- a misdirection of the jet from the injection nozzle to the hollow, box section profile (e.g., due to the presence of partial obstructions of said nozzle); and/or
- a jet having an excessively wide or irregular cone of flow, such that it is not confined to the inlet slot in the internal cavity defined by the partially open box body.

Therefore, the comparison based on the direction of the jet and/or the shape of said jet allows for the identification of most of the anomalies possible in the foaming stage and efficient and timely intervention to avoid or at least reduce leakages of polyurethane foam.

Preferably, the aforesaid alarm procedure comprises:
- activating an audible and/or visual signalling device 22 if a deviation from said reference image having a magnitude less than a predefined safety margin is detected; or
- the automatic blocking of the entire line 1, and in particular of the foaming machine 4, if a deviation from said reference image having a magnitude larger than said predefined safety margin is detected.

For this purpose, the control system 20 is connected to the audible and/or visual signalling device 22 and a general blocking device 23 of the line 1.

Preferably, activation of the audible and/or visual signalling device 22 is reserved for the occurrence of operational situations wherein the dispensed jet does not yet have characteristics that are likely to cause polyurethane foam leakage, but which are potentially likely to degenerate into foam leakage situations. In this case, the audible and/or visual signalling may allow production line operators to program a temporary blocking of the system to allow an adjustment of the nozzle to restore a regular jet.

The automatic blocking of the entire line is to be considered an emergency action determined by the occurrence of an actual polyurethane foam leakage. In this case, in order to reduce the extent of soiling and thus the subsequent cleaning and restoration of the line 1, it is essential to promptly stop the supply of polyurethane foam.

Advantageously, the control system 20 is configured to process a predefined number of images captured in the unit of time.

Preferably, the aforesaid general blocking device 23 of the line 1 is programmed to disable the foaming machine 40 in priority to other devices of the line 1.

Preferably, said optical acquisition device 10 is a camera or video camera.

Advantageously, said optical acquisition device 10 is associated with a support structure 11. In particular, said support structure 11 may be connected to the support structure of the profiling machine 3.

Preferably, the support structure 11 of the optical acquisition device 10 comprises an orientable portion 12, 13 so that the orientation of the optical acquisition device 10 with respect to the injection nozzle 40 may be varied when arranged in the dispensing position.

Operationally, the orientation of the optical acquisition device 10 with respect to the injection nozzle 40 may be varied to allow the device 10 to better frame the jet G dispensed from the injection nozzle 40.

In particular, the support structure 11 is an articulated structure.

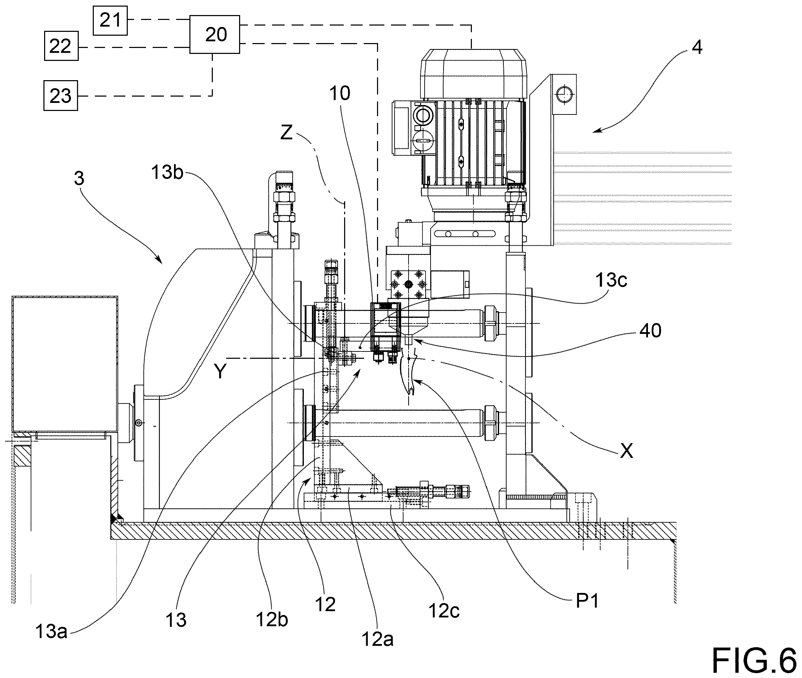

According to the preferred embodiment of the invention, illustrated in particular in Fig. 6 to 10, the support structure 11 comprises a support bracket 12 defined by the joining of a horizontal base plate 12a and a vertical base plate 12b. The position of the support bracket 12 with respect to the injection nozzle 40 is adjustable transversely to the longitudinal direction of advancement X. For this purpose, the horizontal base plate 12a slides - transversely to the longitudinal direction of advancement X - by a fixed support base 12c which is associated with the support structure of the profiling machine 3.

The support structure 11 further comprises an articulated arm 13, at one free end 13' of which the optical acquisition device 10 is attached.

More specifically, the articulated arm 13 comprises three segments 13a, 13b, and 13c connected together by two joints 14 and 15. The articulated arm 13 is slidingly associated in the vertical direction with the vertical plate 12b of the support bracket 12 via a first (initial) segment 13a. In turn, the second (intermediate) segment 13b is connected to the first (initial) segment 13a via a first joint 14, which defines a horizontal axis of rotation Y, transverse to the longitudinal direction of advancement X. Finally, the third segment 13c (terminal; defining the free end of the articulated arm 13) is connected to the second (intermediate) segment 13b via a second joint 15, which defines a vertical axis of rotation Z.

Operationally, the orientation of the optical acquisition device 10 may be adjusted with respect to the injection nozzle 40 by varying:
- the relative position between the support bracket 12 and the fixed support base 12c; and/or
- the relative position between the articulated arm 13 and the support bracket 12; and/or
- the relative positions between the three segments 13a, 13b, and 13c of the articulated arm 13.

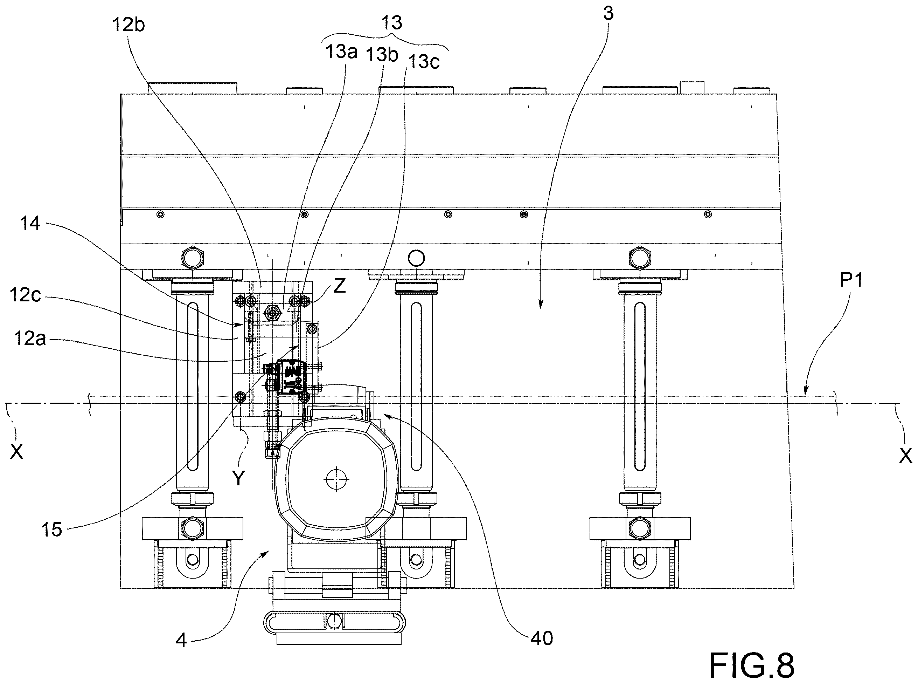

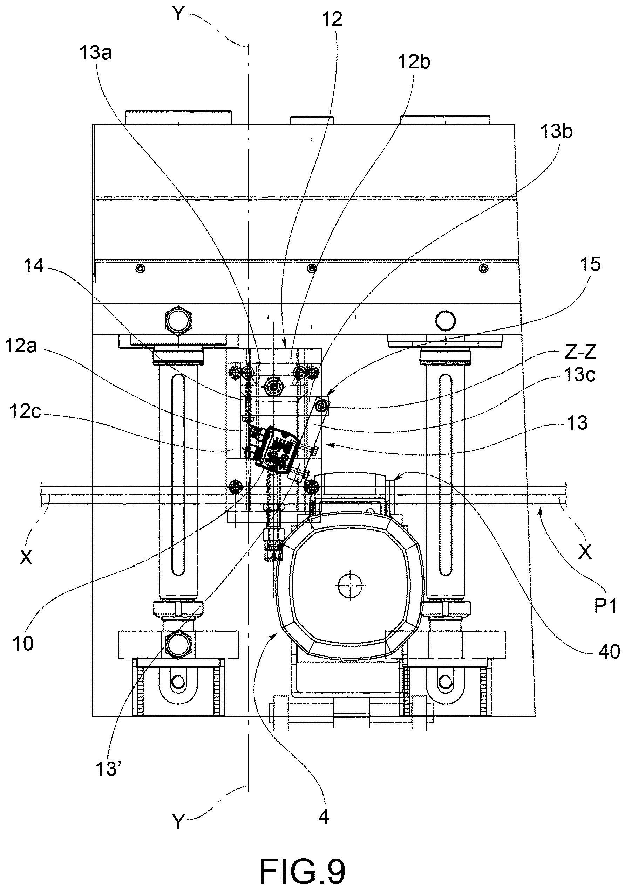

Comparing Fig. 8 with Fig. 9, it is possible to appreciate the different orientation of the device 10 with respect to the injection nozzle 40 obtained by a rotation around the axis Z allowed by the joint 15 of the articulated arm 13.

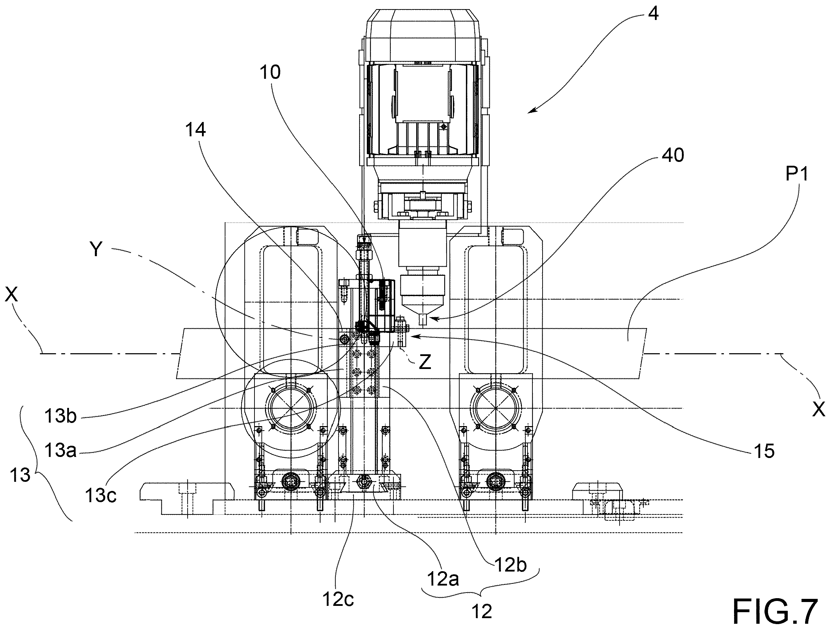

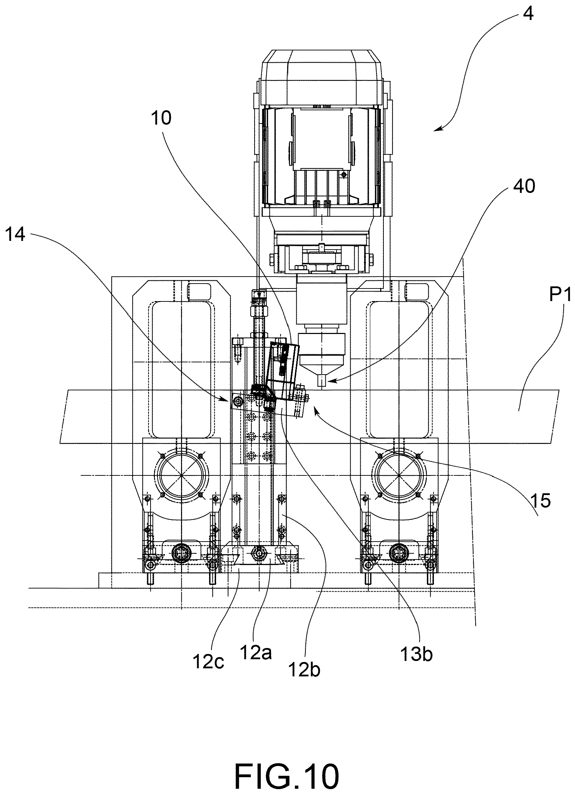

On the other hand, comparing Fig. 7 with Fig. 10, it is possible to appreciate the different orientation of the device 10 with respect to the injection nozzle 40 obtained by a rotation around the axis Y allowed by the joint 14 of the articulated arm 13.

The subject of the present invention is also to provide a method for producing slats for roller shutters.

In particular, the method according to the invention is implemented by means of a production line of slats for shutters, in particular such as the one that is the subject of the present invention and in particular as described above. For this reason, the method is described below using the same numerical references used to describe the production line 1 of slats for shutters according to the invention.

More specifically, the production method of slats for shutters comprises the following operational steps:
- a) forming a closed hollow, box section profile from a strip of metal sheet by means of a profiling machine 3, sliding it along a longitudinal direction of advancement X; and
- b) dosing into the hollow, box section profile, partially open P1 while it is being formed during step a) a predetermined amount of a mixture of polyol and isocyanate in the unit of time by means of a foaming machine 4, integrated into the profiling machine 3 and equipped with an injection nozzle 40 positionable at a predetermined dispensing position along said longitudinal direction of advancement X.

According to the invention, the method comprises the further operational steps of:
- c) capturing, preferably continuously, images of the jet G of the polyol and isocyanate mixture dispensed from said injection nozzle 40 via an optical acquisition device 10 arranged in proximity to said predetermined dispensing position; and
- d) comparing, by means of a control system 20 connected to said optical acquisition device 10, the images captured with at least one reference image of the jet G stored in memory means 21 associated with said control system 20 so as to verify whether the captured images of the jet G are comparable within predefined error margins with said reference image or whether they deviate from it.

The aforesaid reference image relates to a jet G correlated with a proper foaming of the hollow, box section profile, partially open P1 while it is being formed.

As already pointed out above, the expression "jet correlated with a proper foaming of the hollow, box section profile, partially open while it is being formed" means a jet having characteristics such as to ensure that the mixture of polyol and isocyanate dispensed by the injection nozzle enters the hollow box section profile completely without dispersing even in part to the outside.

The method further comprises the additional operational step e) of activating an alarm procedure if a deviation from said reference image is detected.

Due to the invention, the slat production is subjected to continuous monitoring of the foaming stage. Said monitoring allows for real-time detection of operational situations that may result in anomalous foaming and the polyurethane foam leaking out of the hollow, box section profile.

Operationally, the activation of an alarm procedure correlated with the detection of anomalous situations may therefore allow for:
- execution of operations aimed at restoring optimal foaming conditions before foam leakage situations occur; or
- a timely shutdown of the plant, and in particular the foaming machine, to minimize the amount of soiling generated by any leakage of polyurethane foam.

Thus, due to the invention, the frequency and extent of polyurethane foam leaks may be significantly reduced, thereby limiting downtime associated with cleaning operations.

Advantageously, the aforesaid comparison step d) is performed based on predefined geometric characteristics of the jet, which preferably comprise jet direction and/or jet shape.

Preferably, the aforesaid comparison step d) is performed by processing a predefined number of images captured in the unit of time.

Preferably, the alarm procedure comprises:
- the activation of an audible and/or visual signalling device 22 if a deviation from said reference image having a magnitude less than a predefined safety margin is detected; or
- the automatic blocking of the entire line 1, and in particular of the foaming machine 4, if a deviation from said reference image is detected having a magnitude larger than said predefined safety margin.

Preferably, the activation of the audible and/or visual signalling device 22 is reserved to the occurrence of operational situations in which the jet dispensed does not yet have characteristics that are likely to cause leakages of polyurethane foam, but which are potentially likely to degenerate into foam leakage situations. In this case, the audible and/or visual signalling may allow production line operators to program a temporary blocking of the system to allow an adjustment of the nozzle to restore a regular jet.

The automatic blocking of the entire line is to be considered an emergency action determined by the occurrence of an actual leakage polyurethane foam. In this case, in order to reduce the extent of soiling and thus the subsequent cleaning and restoration of the line 1, it is essential to promptly stop the supply of polyurethane foam.

Advantageously, after steps a) and b), the production method comprises the following additional operational steps of:
- e) allowing the polyol and isocyanate mixture to polymerize until an expanded polyurethane foam is completely formed inside the closed, hollow, box section profile, so that a foamed, closed, hollow, box section profile is obtained, and
- f) cutting the foamed, closed, hollow, box section profile using a cutting apparatus 6 to obtain semi-finished slats of a predetermined length.

The advantages associated with the application of the production method according to the invention are the same as those described in relation to the production line 1 according to the invention and will not be presented again for brevity of description.

The invention achieves numerous advantages which have already been described in part.

The line and method for producing slats for roller shutters according to the invention allow the frequency and extent of leakages of polyurethane foam to be significantly reduced, thereby limiting downtime associated with cleaning operations.

The production line and method for producing slats for roller shutters according to the invention are also operationally simple to control and at the same time reliable.

The invention thus conceived therefore achieves its intended objects.

Obviously, in its practical embodiment, it may also assume forms and configurations that differ from the ones described above as defined in the claims.

Moreover, all parts may be replaced with technically equivalent ones, and the dimensions, forms, and materials employed may be of any type depending on the needs.

## Claims

1. Production line (1) of slats for roller shutters, comprising:
- a profiling machine (3) suitable to form a closed hollow, box section profile from a metal strip, making it slide along a longitudinal direction of advancement (X); and
- a foaming machine (4), integrated in the profiling machine (3) and suitable to dose inside the hollow, box section profile, partially open (P1) while it is being formed, a predetermined quantity of a mixture of polyol and isocyanate in a unit of time by means of an injection nozzle (40) which can be positioned in a predefined dosing position along said longitudinal direction of advancement (X),
**characterized in that** it comprises an optical acquisition device (10) which is arranged in proximity to said predefined dosing position and is suitable to capture, preferably continuously, images of the jet (G) of polyol and isocyanate mixture dispensed by said injection nozzle (40),
and **in that** it comprises a control system (20) which is connected to said optical acquisition device (10) to capture the images of the jet (G) generated by said device (10) and is configured to compare the captured images with at least one reference image of the jet (G) stored in memory means (21) associated with said control system (20) so as to verify whether the captured images of the jet (G) are comparable within predefined error margins with said reference image or whether they deviate from it, wherein said reference image is relative to a jet related to a correct foaming of the hollow, box section profile, partially open (P1) while it is being formed, said control system (20) being programmed to activate an alarm procedure in the event in which a deviation from said reference image is detected.

2. The line (1) according to claim 1, wherein said control system (20) is configured to compare the captured images with said at least one jet reference image (G) based on predefined geometric characteristics of the jet, which preferably comprise jet direction and/or jet shape.

3. The line (1) according to claim 1 or 2, wherein said alarm procedure comprises:
- activation of an audible and/or visual signalling device (22) if a deviation from said reference image of a magnitude less than a predefined safety margin is detected; or
- the automatic blocking of the entire line (1), and in particular of the foaming machine (4), if a deviation from said reference image is detected which is larger than said predefined safety margin.

4. The line (1) according to claim 3, wherein said control system (20) is connected to said audible and/or visual signalling device (22) and to a device (23) for general blocking of the line (1).

5. The line (1) according to claim 4, wherein said line (1) general blocking device (23) is programmed to deactivate the foaming machine (40) on a priority basis.

6. The line (1) according to any of the preceding claims, wherein said optical acquisition device (10) is a camera or video camera.

7. The line (1) according to any of the preceding claims, wherein said optical acquisition device (10) is connected to a support structure (11).

8. The line (1) according to claim 7, wherein said support structure (11) comprises an orientable portion (12, 13).

9. The line (1) according to any of the preceding claims, wherein said control system (20) is configured to process a predefined number of images captured in the unit of time.

10. Production method of slats for roller shutters, comprising the following operating steps:
- a) forming a closed, hollow, box section profile from a strip of metal sheet by means of a profiling machine (3), making it slide along a longitudinal direction of advancement (X);
- b) dosing into the hollow, box section profile, partially open (P1) while it is being formed during step a), a predetermined quantity of a polyol and isocyanate mixture in a unit of time, by means of a foaming machine (4), integrated in the profiling machine (3) and provided with an injection nozzle (40) which can be positioned in a predefined dosing position along said longitudinal direction of advancement (X);
**characterized in that** it comprises the further operating steps of:
- c) capturing, preferably continuously, images of the jet (G) of polyol and isocyanate mixture dispensed by said injection nozzle (40) by means of an optical acquisition device (10) placed in proximity to said predetermined dosing position;
- d) comparing by means of a control system (20) connected to said optical acquisition device (10) the captured images with at least one reference image of the jet (G) stored in memory means (21) associated with said control system (20) so as to verify whether the captured images of the jet (G) are comparable within predefined error margins with said reference image or whether they deviate from it, wherein said reference image is relative to a jet related to a correct foaming of the hollow, box section profile, partially open (P1) while it is being formed; and
- e) activating an alarm procedure in the event in which a deviation from said reference image is detected.

11. The method according to claim 10, wherein said step d) of comparing is carried out on the basis of predefined geometric characteristics of the jet, which preferably comprise the direction of the jet and/or the shape of the jet.

12. The method according to claim 10 or 11, wherein said step d) of comparing is carried out by processing a predefined number of images captured in the unit of time.

13. The method according to claim 10, 11 or 12, wherein said alarm procedure comprises:
- activation of an audible and/or visual signalling device (22) if a deviation from said reference image of a magnitude less than a predefined safety margin is detected; or
- the automatic blocking of the entire line (1), and in particular of the foaming machine (4), if a deviation from said reference image is detected which is larger than said predefined safety margin.

## Patentansprüche

1. Produktionslinie (1) von Lamellen für Rollläden, aufweisend:
- eine Profiliermaschine (3), die geeignet ist, aus einem Metallband ein geschlossenes Hohlkastenprofil zu bilden, indem sie es entlang einer Vorschublängsrichtung (X) gleiten lässt; und
- eine Schäummaschine (4), die in die Profiliermaschine (3) integriert und geeignet ist, innerhalb des während seiner Bildung teilweise offenen Hohlkastenprofils (P1) eine vorbestimmte Menge eines Gemischs aus Polyol und Isocyanat in einer Zeiteinheit mittels einer Einspritzdüse (40) zu dosieren, die in einer vordefinierten Dosierposition entlang der Vorschublängsrichtung (X) positioniert werden kann,
**dadurch gekennzeichnet, dass** sie eine optische Erfassungsvorrichtung (10) aufweist, die in der Nähe der vordefinierten Dosierposition angeordnet ist und geeignet ist, vorzugsweise kontinuierlich Bilder des Strahls (G) des Gemischs aus Polyol und Isocyanat aufzunehmen, das durch die Einspritzdüse (40) abgegeben wird,
und dass sie ein Steuersystem (20) aufweist, das mit der optischen Erfassungsvorrichtung (10) verbunden ist, um die durch die Vorrichtung (10) erzeugten Bilder des Strahls (G) aufzunehmen, und konfiguriert ist, die aufgenommenen Bilder mit mindestens einem Referenzbild des Strahls (G) zu vergleichen, das in einer dem Steuersystem (20) zugeordneten Speichereinrichtung (21) gespeichert ist, um zu überprüfen, ob die aufgenommenen Bilder des Strahls (G) innerhalb vordefinierter Fehlermargen mit dem Referenzbild vergleichbar sind oder ob sie davon abweichen, wobei sich das Referenzbild auf einen Strahl bezieht, der auf eine korrekte Schäumung des während seiner Bildung teilweise offenen Hohlkastenprofils (P1) bezogen ist, wobei das Steuersystem (20) programmiert ist, um eine Alarmvorgehensweise in dem Fall zu aktivieren, in dem eine Abweichung von dem Referenzbild detektiert wird.

2. Linie (1) nach Anspruch 1, wobei das Steuersystem (20) konfiguriert ist, die aufgenommenen Bilder mit dem mindestens einen Strahlreferenzbild (G) basierend auf vordefinierten geometrischen Eigenschaften des Strahls zu vergleichen, die vorzugsweise Strahlrichtung und/oder Strahlform umfassen.

3. Linie (1) nach Anspruch 1 oder 2, wobei die Alarmvorgehensweise umfasst:
- Aktivierung einer akustischen und/oder visuellen Signalisierungsvorrichtung (22), wenn eine Abweichung von dem Referenzbild, die kleiner ist als eine vordefinierte Sicherheitsmarge, detektiert wird; oder
- die automatische Sperrung der gesamten Linie (1) und insbesondere der Schäummaschine (4), wenn eine Abweichung von dem Referenzbild detektiert wird, die größer ist als die vordefinierte Sicherheitsmarge.

4. Linie (1) nach Anspruch 3, wobei das Steuersystem (20) mit der akustischen und/oder visuellen Signalisierungsvorrichtung (22) und mit einer Vorrichtung (23) zur Generalsperrung der Linie (1) verbunden ist.

5. Linie (1) nach Anspruch 4, wobei die Vorrichtung (23) zur Generalsperrung der Linie (1) programmiert ist, um die Schäummaschine (40) nach Priorität zu deaktivieren.

6. Linie (1) nach einem der vorhergehenden Ansprüche, wobei die optische Erfassungsvorrichtung (10) eine Kamera oder Videokamera ist.

7. Linie (1) nach einem der vorhergehenden Ansprüche, wobei die optische Erfassungsvorrichtung (10) mit einer Trägerstruktur (11) verbunden ist.

8. Linie (1) nach Anspruch 7, wobei die Trägerstruktur (11) einen ausrichtbaren Abschnitt (12, 13) aufweist.

9. Linie (1) nach einem der vorhergehenden Ansprüche, wobei das Steuersystem (20) konfiguriert ist, eine vordefinierte Anzahl von in der Zeiteinheit aufgenommenen Bildern zu verarbeiten.

10. Verfahren zur Produktion von Lamellen für Rollläden, umfassend die folgenden Arbeitsschritte:
- a) Bilden eines geschlossenen Hohlkastenprofils aus einem Blechstreifen mittels einer Profiliermaschine (3), die es entlang einer Vorschublängsrichtung (X) gleiten lässt;
- b) Dosieren, in das während seiner Bildung während Schritt a) teilweise offene Hohlkastenprofil (P1), einer vorbestimmten Menge eines Gemischs aus Polyol und Isocyanat in einer Zeiteinheit mittels einer Schäummaschine (4), die in die Profiliermaschine (3) integriert und mit einer Einspritzdüse (40) versehen ist, die in einer vordefinierten Dosierposition entlang der Vorschublängsrichtung (X) positioniert werden kann; **dadurch gekennzeichnet, dass** es umfasst die weiteren Arbeitsschritte des:
- c) Erfassens, vorzugsweise kontinuierlich, von Bildern des Strahls (G) des Gemischs aus Polyol und Isocyanat, das durch die Einspritzdüse (40) abgegeben wird, mittels einer optischen Erfassungsvorrichtung (10), die in der Nähe der vorbestimmten Dosierposition positioniert ist;
- d) Vergleichens, mittels eines Steuersystems (20), das mit der optischen Erfassungsvorrichtung (10) verbunden ist, der aufgenommenen Bilder mit mindestens einem Referenzbild des Strahls (G), das in einer Speichereinrichtung (21) gespeichert ist, die dem Steuersystem (20) zugeordnet ist, um zu überprüfen, ob die aufgenommenen Bilder des Strahls (G) innerhalb vordefinierter Fehlermargen mit dem Referenzbild vergleichbar sind oder ob sie davon abweichen, wobei sich das Referenzbild auf einen Strahl bezieht, der auf eine korrekte Schäumung des während seiner Bildung teilweise offenen Hohlkastenprofils (P1) bezogen ist; und
- e) Aktivierens einer Alarmvorgehensweise in dem Fall, in dem eine Abweichung von dem Referenzbild detektiert wird.

11. Verfahren nach Anspruch 10, wobei der Schritt d) des Vergleichens auf der Grundlage von vordefinierten geometrischen Eigenschaften des Strahls erfolgt, die vorzugsweise die Richtung des Strahls und/oder die Form des Strahls umfassen.

12. Verfahren nach Anspruch 10 oder 11, wobei der Schritt d) des Vergleichens durch Verarbeiten einer vordefinierten Anzahl von in der Zeiteinheit aufgenommenen Bildern erfolgt.

13. Verfahren nach Anspruch 10, 11 oder 12, wobei die Alarmvorgehensweise umfasst:
- Aktivierung einer akustischen und/oder visuellen Signalisierungsvorrichtung (22), wenn eine Abweichung von dem Referenzbild mit einer Größe, die kleiner ist als eine vordefinierte Sicherheitsmarge, detektiert wird; oder
- die automatische Sperrung der gesamten Linie (1), insbesondere der Schäummaschine (4), wenn eine Abweichung von dem Referenzbild detektiert wird, die größer ist als die vordefinierte Sicherheitsmarge.

## Revendications

1. Ligne de fabrication (1) de lames pour volets roulants comprenant :
- une machine à profiler (3) appropriée pour former un profilé en caisson creux fermé à partir d'une bande métallique, en le faisant glisser le long d'une direction longitudinale d'avance (X) ; et
- une machine de moussage (4), intégrée à la machine à profiler (3) et appropriée pour doser à l'intérieur du profilé en caisson creux, partiellement ouvert (P1) pendant la formation de celui-ci, une quantité prédéterminée d'un mélange de polyol et d'isocyanate dans une unité de temps au moyen d'une buse d'injection (40) qui peut être positionnée dans une position de dosage prédéfinie le long de ladite direction longitudinale d'avance (X),
**caractérisée en ce qu'**elle comprend un dispositif d'acquisition optique (10) qui est agencé à proximité de ladite position de dosage prédéfinie et est approprié pour capturer, de préférence en continu, des images du jet (G) du mélange de polyol et d'isocyanate distribué par ladite buse d'injection (40),
et **en ce qu'**elle comprend un système de commande (20) qui est relié audit dispositif d'acquisition optique (10) pour capturer les images du jet (G) générées par ledit dispositif (10) et est configuré pour comparer les images capturées à au moins une image de référence du jet (G) stockée dans des moyens de mémoire (21) associés audit système de commande (20) de façon à vérifier si les images capturées du jet (G) sont comparables à l'intérieur de marges d'erreur prédéfinies à ladite image de référence ou si elles s'en écartent, dans laquelle ladite image de référence est relative à un jet lié à un moussage correct du profilé en caisson creux, partiellement ouvert (P1) pendant la formation de celui-ci, ledit système de commande (20) étant programmé pour activer une procédure d'alarme dans le cas où un écart par rapport à ladite image de référence est détecté.

2. Ligne (1) selon la revendication 1, dans laquelle ledit système de commande (20) est configuré pour comparer les images capturées à ladite au moins une image de référence de jet (G) en fonction de caractéristiques géométriques prédéfinies du jet, qui comprennent de préférence une direction de jet et/ou une forme de jet.

3. Ligne (1) selon la revendication 1 ou 2, dans laquelle ladite procédure d'alarme comprend :
- l'activation d'un dispositif de signalisation sonore et/ou visuelle (22) si un écart par rapport à ladite image de référence d'une importance moindre que celle d'une marge de sécurité prédéfinie est détecté ; ou
- le blocage automatique de la ligne entière (1), et en particulier de la machine de moussage (4), si un écart par rapport à ladite image de référence qui est supérieur à ladite marge de sécurité prédéfinie est détecté.

4. Ligne (1) selon la revendication 3, dans laquelle ledit système de commande (20) est relié audit dispositif de signalisation sonore et/ou visuelle (22) et à un dispositif (23) de blocage général de la ligne (1).

5. Ligne (1) selon la revendication 4, dans laquelle ledit dispositif de blocage général (23) de la ligne (1) est programmé pour désactiver la machine de moussage (40) en priorité.

6. Ligne (1) selon l'une quelconque des revendications précédentes, dans laquelle ledit dispositif d'acquisition optique (10) est une caméra ou une caméra vidéo.

7. Ligne (1) selon l'une quelconque des revendications précédentes, dans laquelle ledit dispositif d'acquisition optique (10) est relié à une structure de support (11).

8. Ligne (1) selon la revendication 7, dans laquelle ladite structure de support (11) comprend une partie orientable (12, 13).

9. Ligne (1) selon l'une quelconque des revendications précédentes, dans laquelle ledit système de commande (20) est configuré pour traiter un nombre prédéfini d'images capturées dans l'unité de temps.

10. Procédé de fabrication de lames pour volets roulants, comprenant les étapes de fonctionnement suivantes :
- a) la formation d'un profilé en caisson creux fermé à partir d'une bande de tôle au moyen d'une machine à profiler (3), en le faisant glisser le long d'une direction longitudinale d'avance (X) ; et
- b) le dosage dans le profilé en caisson creux, partiellement ouvert (P1) pendant la formation de celui-ci lors de l'étape a), d'une quantité prédéterminée d'un mélange de polyol et d'isocyanate dans une unité de temps, au moyen d'une machine de moussage (4), intégrée à la machine à profiler (3) et dotée d'une buse d'injection (40) qui peut être positionnée dans une position de dosage prédéfinie le long de ladite direction longitudinale d'avance (X) ;
**caractérisé en ce qu'**il comprend les étapes de fonctionnement supplémentaires consistant à :
- c) capturer, de préférence en continu, des images du jet (G) du mélange de polyol et d'isocyanate distribué par ladite buse d'injection (40) au moyen d'un dispositif d'acquisition optique (10) placé à proximité de ladite position de dosage prédéterminée ;
- d) comparer au moyen d'un système de commande (20) relié audit dispositif d'acquisition optique (10) les images capturées à au moins une image de référence du jet (G) stockée dans des moyens de mémoire (21) associés audit système de commande (20) de façon à vérifier si les images capturées du jet (G) sont comparables à l'intérieur de marges d'erreur prédéfinies à ladite image de référence ou si elles s'en écartent, dans lequel ladite image de référence est relative à un jet lié à un moussage correct du profilé en caisson creux, partiellement ouvert (P1) pendant la formation de celui-ci ; et
- e) activer une procédure d'alarme dans le cas où un écart par rapport à ladite image de référence est détecté.

11. Procédé selon la revendication 10, dans lequel ladite étape d) de comparaison est réalisée sur la base de caractéristiques géométriques prédéfinies du jet, qui comprennent de préférence la direction du jet et/ou la forme du jet.

12. Procédé selon la revendication 10 ou 11, dans lequel ladite étape d) de comparaison est réalisée par traitement d'un nombre prédéfini d'images capturées dans l'unité de temps.

13. Procédé selon la revendication 10, 11 ou 12, dans lequel ladite procédure d'alarme comprend :
- l'activation d'un dispositif de signalisation sonore et/ou visuelle (22) si un écart par rapport à ladite image de référence d'une importance moindre que celle d'une marge de sécurité prédéfinie est détecté ; ou
- le blocage automatique de la ligne entière (1), et en particulier de la machine de moussage (4), si un écart par rapport à ladite image de référence qui est plus important que ladite marge de sécurité prédéfinie est détecté.
